# EUROPEAN PATENT SPECIFICATION

(11) **EP 3 326 762 B1**
(45) Date of publication and mention of the grant of the patent: **21.08.2019**
(21) Application number: 17203132.0
(22) Date of filing: 22.11.2017
(51) Int. Cl.: B25J 9/10

(54) **ROBOT-ARM**
ROBOTERARM
BRAS DE ROBOT

(30) Priority: 29.11.2016 NL 2017887
(43) Date of publication of application: 30.05.2018
(73) Proprietor: Focal Meditech B.V., 5026 SP Tilburg (NL)
(72) Inventor: DE JONG, Ralf, 5106 NZ Dongen-Vaart (NL); VERSTEGEN, Paulus Petrus Hendricus, 5406 AT Uden (NL); GROENLAND, Paulus Christianus Maria, 5056 AD Berkel-Enschot (NL)
(74) Representative: Patentwerk B.V.

(56) References cited:
- EP-B1- 2 337 656
- DE-B- 1 264 909
- JP-A- 2003 089 090

## Description

The present invention concerns a robot arm, in particular a robot arm for moving an end effector relative to a fixed world, more particularly a wheelchair or a specially configured workplace.

We are therefore concerned with mobility aids for people with function difficulties, and in the context of this invention, these could be aids for handling products and goods, or for support or replacement of arm function, hand function, finger function or a combination of these functions, aids for gripping or lower arm support so that hands can be used. In colloquial terms, these aids are described as dynamic arm supports.

Robot arms are already known and used for many industrial applications.

A robot arm according to the preamble of appended claim 1 is known from document EP 2 337 656 B1.

Also, they are often used for the movement of end effectors. Such end effectors may for example be an arm fitting in the case of arm supports, or a fork or spoon in the case of an eating aid.

Often, one objective is to be able to operate the segments constituting the robot arm, and the end effectors connected to the arm, independently of each other, further preferably such that operation of the various components does not influence the other components.

The object of the present invention is therefore to provide a solution and create a robot arm comprising:
- a first parallelogram with four corner points (A, B, C, D) and four sides (AB, BC, CD, DA), wherein a first side (AB) connects a first corner point (A) to a second corner point (B), a second side (BC) connects the second corner point (B) to a third corner point (C), a third side (CD) connects the third corner point (C) to a fourth corner point (D) and a fourth side (DA) connects the fourth corner point (D) to the first corner point (A), wherein the four corner points (A, B, C, D) all form hinge points; and
- a second parallelogram with four corner points (E, F, G, H) and four sides (EF, FG, GH, HE), wherein a first side (EF) of the second parallelogram connects a first corner point (E) to a second corner point (F) of the second parallelogram, a second side (FG) of the second parallelogram connects the second corner point (F) to a third corner point (G) of the second parallelogram, a third side (GH) of the second parallelogram connects the third corner point (G) to a fourth corner point (H) of the second parallelogram and a fourth side (HE) of the second parallelogram connects the fourth corner point (H) to the first corner point (E) of the second parallelogram, wherein the four corner points (E, F, G, H) of the second parallelogram all form hinge points; wherein
   ∘ the first side (AB) of the first parallelogram is connected to a cable-operable device; and
   ∘ the third side (CD) of the first parallelogram is connected to the first side (EF) of the second parallelogram; such that the parallelograms lie in the same plane and such that the fourth corner point (D) of the first parallelogram and the first corner point (E) of the second parallelogram coincide; and wherein
   ∘ the third side (GH) of the second parallelogram is connected to a fixed world or reference body; wherein
- a cable extending from the fixed world or reference body to the operable device is routed via pulleys rotating about the first corner point (A) and fourth corner point (D) of the first parallelogram and about the second corner point (F) and third corner point (G) of the second parallelogram; wherein
- the pulleys at the first corner point (A) and the fourth corner point (D) of the first parallelogram have the same diameter; and
- the pulleys at the second corner point (F) and the third corner point (G) of the second parallelogram have the same diameter.

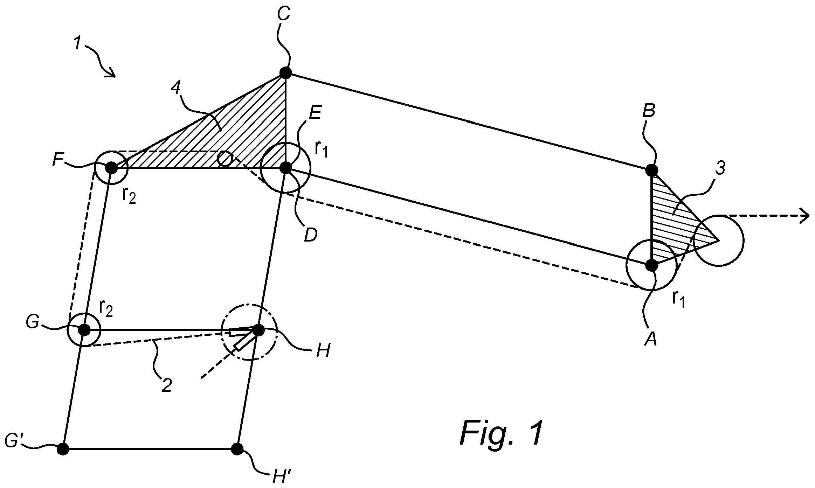

For the designation used in the present description for the corner points and sides, reference is made to figure 1 for clarification. The corner points are indicated with letters in counterclockwise order, and the sides are designated with a combination of the letters of the corner points they connect.

A construction according to the invention as described above offers the advantage that movement / deformation of the respective parallelograms by rotation of their sides about their hinge points, and/or relative to each other, does not cause any change in the length of the path of the cord, and vice versa: the application of a force to the cord in order to operate the device does not influence the (mutual) orientation of the parallelograms.

The third side (CD) of the first parallelogram according to the invention is fixedly connected to the first side (EF) of the second parallelogram. In the present invention, the third side (CD) of the first parallelogram is connected substantially at right angles to the first side (EF) of the second parallelogram. With such a configuration, the movement ranges of the two parallelograms stand at right angles to each other so that together they can cover substantially a rectangle. Every other angle is also however conceivable.

In a following embodiment, the cable intersects the fourth corner point (H) of the second parallelogram. In this embodiment, the effect of applying a force to the cable is fully eliminated.

The fixed world need not necessarily be situated at point H. Therefore it is also conceivable that the cable is routed through the fourth corner point (H) of the second parallelogram, coinciding with a rotation axis of the hinge point. Preferably, the cable is routed via two pulleys with rotation axes standing perpendicular to each other at the orientation coinciding with the rotation axis.

The fixed world may for example be a wheelchair, or a specially configured workplace, and the operable device may be an arm fitting or an end effector in the case of an arm support, or a fork or spoon in the case of an eating aid.

The invention will now be explained with reference to the following figures in which:
Figure 1 shows a device according to the present invention; and
Figure 2 shows a detail of the device according to figure 1.

Figure 1 shows a robot arm 1 comprising a first parallelogram with four corner points (A, B, C, D) and four sides (AB, BC, CD, DA), which corners all form hinge points; a second parallelogram with four corner points (E, F, G, H) and four sides (EF, FG, GH, HE), which corner points all form hinge points; of which a first side (AB) of the first parallelogram is connected to a cable-operable device 3; and a third side (CD) of the first parallelogram is connected to a first side (EF) of the second parallelogram; such that the parallelograms lie in the same plane and their points D and E coincide; and wherein the third side (GH) of the second parallelogram is connected to the fixed world (/reference body) 3; wherein the cable 2 from the fixed world 3 (/reference body) to the operable device is routed via the pulleys rotating about points A, D, F, G, wherein the pulleys at points A and D have the same diameter and the pulleys at points F and G have the same diameter. The third side (CD) of the first parallelogram is connected substantially at right angles to the first side (EF) of the second parallelogram. The second parallelogram may - as shown - extend further than points G and H, wherein the sides FG and EH respectively extend to points G' and H'.

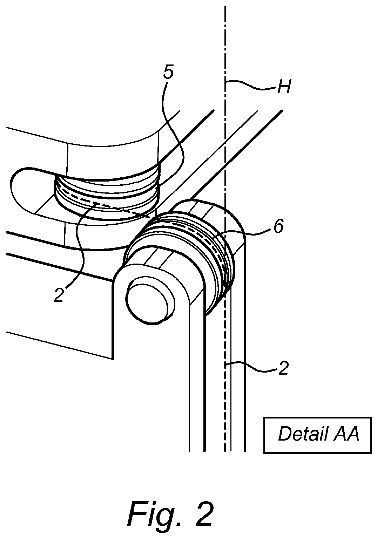

Figure 2 shows a detail AA from figure 1, wherein the cable 2 is routed through point H, coinciding with a rotation axis of the hinge point H. The cable is routed via two pulleys 5, 6 with rotation axes which stand perpendicularly to each other at the orientation coinciding with the rotation axis.

As well as the exemplary embodiments shown, many variants are conceivable which all fall under the scope of protection of the present invention, as defined in the following claims.

## Claims

1. Robot arm comprising:
- a first parallelogram with four corner points (A, B, C, D) and four sides (AB, BC, CD, DA), wherein a first side (AB) connects a first corner point (A) to a second corner point (B), a second side (BC) connects the second corner point (B) to a third corner point (C), a third side (CD) connects the third corner point (C) to a fourth corner point (D) and a fourth side (DA) connects the fourth corner point (D) to the first corner point (A), wherein the four corner points (A, B, C, D) all form hinge points; and
- a second parallelogram with four corner points (E, F, G, H) and four sides (EF, FG, GH, HE), wherein a first side (EF) of the second parallelogram connects a first corner point (E) to a second corner point (F) of the second parallelogram, a second side (FG) of the second parallelogram connects the second corner point (F) to a third corner point (G) of the second parallelogram, a third side (GH) of the second parallelogram connects the third corner point (G) to a fourth corner point (H) of the second parallelogram and a fourth side side (HE) of the second parallelogram connects the fourth corner point (H) to the first corner point (E) of the second parallelogram, wherein the four corner points (E, F, G, H) of the second parallelogram all form hinge points; wherein:
∘ the first side (AB) of the first parallelogram comprises a cable-operable device; and
∘ the third side (CD) of the first parallelogram is connected to the first side (EF) of the second parallelogram; such that the parallelograms lie in the same plane and such that the fourth corner point (D) of the first parallelogram and the first corner point (E) of the second parallelogram coincide; wherein
∘ the third side (GH) of the second parallelogram is connected to a fixed world or reference body; wherein
- a cable extending from the fixed world or reference body to the operable device is routed via pulleys rotating about the first corner point (A) and fourth corner point (D) of the first parallelogram and about the second corner point (F) and third corner point (G) of the second parallelogram; and wherein
- the pulleys at the first corner point (A) and at the fourth corner point (D) of the first parallelogram have the same diameter; and
- the pulleys at the second corner point (F) and at the third corner point (G) of the second parallelogram have the same diameter **characterised in that** the third side (CD) of the first parallelogram is connected at a fixed angle to the first side (EF) of the second parallelogram.

2. Robot arm according to Claim 1, wherein the third side (CD) of the first parallelogram is connected substantially at right angles to the first side (EF) of the second parallelogram.

3. Robot arm according to Claim 1, or 2, wherein:
- the cable intersects the fourth corner point (H) of the second parallelogram.

4. Robot arm according to Claim 3, wherein the cable is routed through the fourth corner point (H) of the second parallelogram, coinciding with a rotation axis of the hinge point.

5. Robot arm according to Claim 3, wherein the cable is routed via two pulleys with rotation axes standing perpendicular to each other at the orientation coinciding with the rotation axis.

6. Robot arm according to any of the preceding claims, wherein the fixed world is a wheelchair.

7. Robot arm according to any of the preceding claims, wherein the operable device is an arm fitting or an end effector such as a fork or spoon.

## Patentansprüche

1. Roboterarm, umfassend:
- ein erstes Parallelogramm mit vier Eckpunkten (A, B, C, D) und vier Seiten (AB, BC, CD, DA), wobei eine erste Seite (AB) einen ersten Eck-punkt (A) mit einem zweiten Eckpunkt (B) verbin-det, eine zweite Seite (BC) den zweiten Eckpunkt (B) mit einem dritten Eckpunkt (C) verbindet, eine dritte Seite (CD) den dritten Eckpunkt (C) mit einem vierten Eckpunkt (D) verbindet, und eine vierte Seite (DA) den vierten Eckpunkt (D) mit dem ersten Eckpunkt (A) verbindet, wobei die vier Eckpunkte (A, B, C, D) alle Angelpunkte bilden; und
- ein zweites Parallelogramm mit vier Eckpunkten (E, F, G, H) und vier Seiten (EF, FG, GH, HE), wobei eine erste Seite (EF) des zweiten Paralle-logramms einen ersten Eckpunkt (E) mit einem zweiten Eckpunkt (F) des zweiten Parallelogramms verbindet, eine zweite Seite (FG) des zweiten Parallelogramms den zweiten Eckpunkt (F) mit ei-nem dritten Eckpunkt (G) des zweiten Parallelo-gramms verbindet, eine dritte Seite (GH) des zweiten Parallelogramms den dritten Eckpunkt (G) mit einem vierten Eckpunkt (H) des zweiten Pa-ralleolgramms verbindet, und eine vierte Seite (HE) des zweiten Parallelogramms den vierten Eckpunkt (H) mit dem ersten Eckpunkt (E) des zweiten Parallelogramms verbindet, wobei die vier Eckpunkte (E, F, G, H) des zweiten Paralle-logramms alle Angelpunkte bilden; wobei:
o die erste Seite (AB) des ersten Parallelogramms eine kabelbedienbare Vorrichtung umfasst; und
o die dritte Seite (CD) des ersten Parallelogramms mit der ersten Seite (EF) des zweiten Parallelo-gramms verbunden ist; so dass die Parallelogram-me in derselben Ebene liegen, und derart, dass der vierte Eckpunkt (D) des ersten Parallelo-gramms und der erste Eckpunkt (E) des zweiten Parallelogramms zusammenfallen; wobei
o die dritte Seite (GH) des zweiten Parallelo-gramms mit einer feststehenden Welt oder einem Referenzkörper verbunden ist; wobei
- ein Kabel, das sich von der feststehenden Welt oder dem Referenzkörper zu der bedienbaren Vor-richtung erstreckt, über Umlenkrollen geführt wird, die um den ersten Eckpunkt (A) und den vierten Eckpunkt (D) des ersten Parallelogramms und um den zweiten Eckpunkt (F) und den dritten Eckpunkt (G) des zweiten Parallelogramms rotie-ren; und wobei
- die Umlenkrollen an dem ersten Eckpunkt (A) und an dem vierten Eckpunkt (D) des ersten Paralle-logramms denselben Durchmesser aufweisen; und
- die Umlenkrollen an dem zweiten Eckpunkt (F) und an dem dritten Eckpunkt (G) des zweiten Paralle-logramms denselben Durchmesser aufweisen, **dadurch gekennzeichnet, dass**
- die dritte Seite (CD) des ersten Parallelogramms in einem festen Winkel mit der ersten Seite (EF) des zweiten Parallelogramms verbunden ist.

2. Roboterarm nach Anspruch 1, wobei die dritte Seite (CD) des ersten Parallelogramms im Wesent-lichen in rechten Winkeln mit der ersten Seite (EF) des zweiten Parallelogramms verbunden ist.

3. Roboterarm nach Anspruch 1 oder 2, wobei
- das Kabel den vierten Eckpunkt (H) des zweiten Parallelogramms kreuzt.

4. Roboterarm nach Anspruch 3, wobei das Kabel durch den vierten Eckpunkt (H) des zweiten Pa-rallelogramms geführt wird, der mit einer Rota-tionsachse des Angelpunkts zusammenfällt.

5. Roboterarm nach Anspruch 3, wobei das Kabel über zwei Umlenkrollen mit Rotationsachsen geführt wird, die in der Orientierung, die mit der Rota-tions¬achse zusammenfällt, senkrecht zueinander stehen.

6. Roboterarm nach einem der vorhergehenden Ansprü-che, wobei die feststehende Welt ein Rollstuhl ist.

7. Roboterarm nach einem der vorhergehenden Ansprü-che, wobei die bedienbare Vorrichtung ein Arman-schlussstück oder ein Endeffektor ist, wie eine Gabel oder ein Löffel.

## Revendications

1. Bras robotisé comprenant :
- un premier parallélogramme avec quatre points de coin (A, B, C, D) et quatre côtés (AB, BC, CD, DA), un premier côté (AB) reliant un premier point de coin (A) à un deuxième point de coin (B), un deuxième côté (BC) reliant le deuxième point de coin (B) à un troisième point de coin (C), un troisième côté (CD) reliant le troisième point de coin (C) à un quatrième point de coin (D), et un quatrième côté (DA) reliant le quatrième point de coin (D) au premier point de coin (A), les quatre points de coin (A, B, C, D) formant tous des points charnières ; et
- un deuxième parallélogramme avec quatre points de coin (E, F, G, H) et quatre côtés (EF, FG, GH, HE), un premier côté (EF) du deuxième parallélogramme reliant un premier point de coin (E) à un deuxième point de coin (F) du deuxième parallélogramme, un deuxième côté (FG) du deuxième parallélogramme reliant le deuxième point de coin (F) à un troisième point de coin (G) du deuxième parallélogramme, un troisième côté (GH) du deuxième parallélogramme reliant le troisième point de coin (G) à un quatrième point de coin (H) du deuxième parallélogramme, et un quatrième côté (HE) du deuxième parallélogramme reliant le quatrième point de coin (H) au premier point de coin (E) du deuxième parallélogramme, les quatre points de coin (E, F, G, H) du deuxième parallélogramme formant tous des points charnières ;
dans lequel :
o le premier côté (AB) du premier parallélogramme comprend un dispositif actionnable par câble ; et
o le troisième côté (CD) du premier parallélogramme est relié au premier côté (EF) du deuxième parallélogramme, de telle sorte que les parallélogrammes se situent dans le même plan et de telle sorte que le quatrième point de coin (D) du premier parallélogramme et le premier point de coin (E) du deuxième parallélogramme coïncident ;
dans lequel
o le troisième côté (GH) du deuxième parallélogramme est relié à un milieu fixe ou un corps de référence ;
dans lequel
- un câble s'étendant depuis le milieu fixe ou le corps de référence jusqu'au dispositif actionnable est acheminé par le biais de poulies tournant autour du premier point de coin (A) et du quatrième point de coin (D) du premier parallélogramme et autour du deuxième point de coin (F) et du troisième point de coin (G) du deuxième parallélogramme ; et
dans lequel
- les poulies au premier point de coin (A) et au quatrième point de coin (D) du premier parallélogramme ont le même diamètre ; et
- les poulies au deuxième point de coin (F) et au troisième point de coin (G) du deuxième parallélogramme ont le même diamètre,
**caractérisé en ce que**
le troisième côté (CD) du premier parallélogramme est relié à un angle fixe au premier côté (EF) du deuxième parallélogramme.

2. Bras robotisé selon la revendication 1, dans lequel le troisième côté (CD) du premier parallélogramme est relié sensiblement à angle droit au premier côté (EF) du deuxième parallélogramme.

3. Bras robotisé selon la revendication 1 ou 2, dans lequel :
- les câbles passent par le quatrième point de coin (H) du deuxième parallélogramme.

4. Bras robotisé selon la revendication 3, dans lequel le câble est acheminé par le quatrième point de coin (H) du deuxième parallélogramme, coïncidant avec un axe de rotation du point charnière.

5. Bras robotisé selon la revendication 3, dans lequel le câble est acheminé par le biais de deux poulies avec des axes de rotation perpendiculaires l'un à l'autre à l'orientation coïncidant avec l'axe de rotation.

6. Bras robotisé selon l'une quelconque des revendications précédentes, dans lequel le milieu fixe est un fauteuil roulant.

7. Bras robotisé selon l'une quelconque des revendications précédentes, dans lequel le dispositif actionnable est un accessoire de bras ou un effecteur terminal tel qu'une fourchette ou une cuillère.
